# EUROPEAN PATENT SPECIFICATION

(11) **EP 2 298 517 B1**
(45) Date of publication and mention of the grant of the patent: **26.12.2012**
(21) Application number: 10177686.2
(22) Date of filing: 20.09.2010
(51) Int. Cl.: B27D 5/00, B29C 63/48, B29C 63/00, B29C 67/00, B29C 43/48, B29C 70/76, B32B 3/12, B29L 7/00, B29L 9/00, B29L 31/60

(54) **Apparatus for preparing a panel for edgebanding**
Vorrichtung zum Vorbereiten von einer Platte zur Kantenumleimung
Dispositif pour préparer un panneau pour l'application d'un bord de protection

(30) Priority: 22.09.2009 IT MO20090235
(43) Date of publication of application: 23.03.2011
(73) Proprietor: SCM Group S.p.A., 47900 Rimini (RN) (IT)
(72) Inventor: Greselin, Stefano, 36050, Bolzano Vicentino (VI) (IT); Busa, Aldo, 36030, Zugliano (VI) (IT); Coltro, Davide, 36010, Monticello Conte Otto (VI) (IT)
(74) Representative: Crugnola, Pietro

(56) References cited:
- EP-A1- 1 640 128
- EP-A1- 1 961 534
- EP-A1- 2 052 822
- EP-A2- 1 574 264
- EP-A2- 1 932 637
- WO-A1-00/53387
- WO-A1-2009/112259
- DE-A1-102004 007 157
- US-A- 4 335 174
- US-A- 5 034 256
- US-A1- 2004 209 085

## Description

The invention relates to an apparatus for preparing a panel for edgebanding, in particular a composite panel with a light structure as per the preamble of claim 1. Such an apparatus is disclosed by WO 00/53387 A.

In the woodworking industry "preparing a panel for edgebanding" refers to the machinings to be performed on lesser thickness perimetrical sides of the panel before a respective decorative edge is applied to the sides, for example a strip or a band of plastics or similar materials. Composite panels with a light structure are known, which are, for example, usable in the furnishing industry to make furniture, shelving, shelves, doors and the like, provided with a layered or "sandwich" structure.

This structure comprises an intermediate layer interposed between a first external layer and a second external layer, which are substantially flat and mutually opposite, made of wood or similar materials.

The intermediate layer is made of a filling material, such as, for example, a sheet of cardboard having a honeycomb structure, that is lighter and less resistant than the material used to make the first and the second external layer.

A method is known for preparing panels of the type disclosed above for edgebanding that comprises using an apparatus provided with a milling unit and with a fixing unit positioned one after the other along a production line.

This method comprises, after the panel has been cut to size, a milling step in which the perimetrical sides of lesser thickness of the panel are milled by a milling cutter with which the milling unit is provided so as to obtain, at and along these perimetrical sides, a longitudinal groove.

In particular, this groove is obtained by milling the intermediate layer and by partially milling the first layer and the second layer so as to form in the first layer and in the second layer respective notches mutually facing one another.

These notches, in use, act as stopping seats for supporting elements, or lists, made of wood or similar materials, these supporting elements having a cross section of a shape that is equal to that of the groove and being arranged for reinforcing the perimetrical sides of the panel and for supporting each a decorative edge element.

After the aforesaid longitudinal grooves have been obtained, the aforesaid method comprises a fixing step in which the supporting elements are fixed in the respective grooves via the fixing unit, this fixing unit comprising a cutting device, a glue distributor and a pressing roller.

In particular, this fixing step comprises a cutting step, in which the supporting elements are cut to measure by the cutting device, a glue distribution step, in which distributing a layer of glue in the aforesaid notches is provided, and an inserting step, in which the supporting elements are inserted into and pressed against the notches by the pressing roller.

One drawback of the aforesaid method is that it is expensive to apply.

This is due to the cost to be borne to purchase the supporting elements, which are made of a particularly expensive material, generally wood.

A further drawback of the aforesaid method is that it is laborious and difficult to apply, which entails reduced productivity with consequent loss of money.

This is due to the fixing step of the supporting elements in the respective grooves, this fixing step being particularly delicate and complicated to implement.

In fact, it is necessary to prepare beforehand the supporting elements in such a manner that the dimensions thereof are such as to be easily inserted into the aforesaid longitudinal grooves.

Also, as these supporting elements are very flexible to compression they do not enable the decorative edge elements to be supported appropriately.

A drawback of the aforesaid apparatus for preparing a panel for edgebanding is that it is expensive and complicated to make.

This is in particular due to the structural complexity of the fixing unit, comprising, as said, the cutting device, the glue distributor and the pressing roller.

An object of the invention is to improve the apparatuses for preparing a panel made of wood or similar materials for edgebanding, in particular a composite panel with a light structure.

Another object of the invention is to provide an apparatus for preparing a panel made of wood or similar materials for edgebanding, in particular a composite panel, that is less costly and easier to make than known apparatuses.

The invention comprises an apparatus for preparing a panel for edgebanding as disclosed in claim 1.

The apparatus according to the invention is cheaper and easier to make than known apparatuses.

In fact, said apparatus does not need the cutting device, the glue distributor and the pressing roller that made known apparatuses particularly expensive and complex to make.

The invention can be better understood and implemented with reference to the attached drawings that illustrate some embodiments thereof by way of non-limiting example, in which:
Figure 1 is a schematic perspective view of a composite panel with a light structure;
Figure 2 is a schematic plan view of the panel in Figure 1;
Figure 3 is a schematic and fragmentary front view of the panel in Figure 1;
Figures 4 to 11, 13 to 18 and 21 to 23 are schematic front views of operating steps included in a method for preparing the panel in Figure 1 for edgebanding;
Figure 12 is an enlarged detail of Figure 11;
Figures 19 and 20 are schematic plan views of further operating steps included in the method for preparing the panel in Figure 1 for edgebanding;
Figure 24 is an enlarged detail of Figure 22;
Figure 25 is a schematic plan view of a first apparatus for preparing the panel in Figure 1 for edgebanding;
Figure 26 is a schematic plan view of a second apparatus for preparing the panel in Figure 1 for edgebanding;
Figures 27, 28 and 33 to 35 are schematic front views of operating steps included in a method for edgebanding the panel in Figure 1;
Figures 29 to 32 are schematic plan views of further operating steps included in the method for edgebanding the panel in Figure 1.

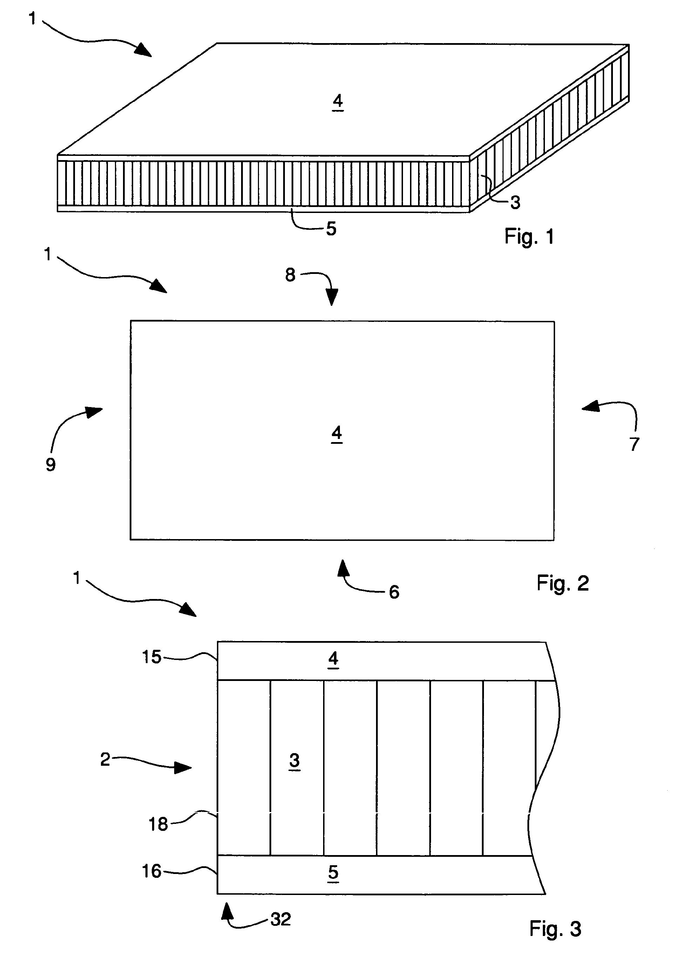

With reference to Figures 1 to 3, there is shown a panel 1 that is usable for making furniture, shelving, shelves, door and the like, comprising a layered or "sandwich" structure 2.

The structure 2 comprises an intermediate layer 3 interposed between a first external layer 4 and a second external layer 5, which are substantially flat and mutually opposite, made of wood or similar materials.

The intermediate layer 3 is substantially flush, in a plan view, with the first layer 4 and with the second layer 5 and is made of a filling material, made of wood or similar materials, lighter and less resistant than the material used to make the first layer 4 and the second layer 5.

In particular, the filling material can be formed by cardboard sheets having a honeycomb structure.

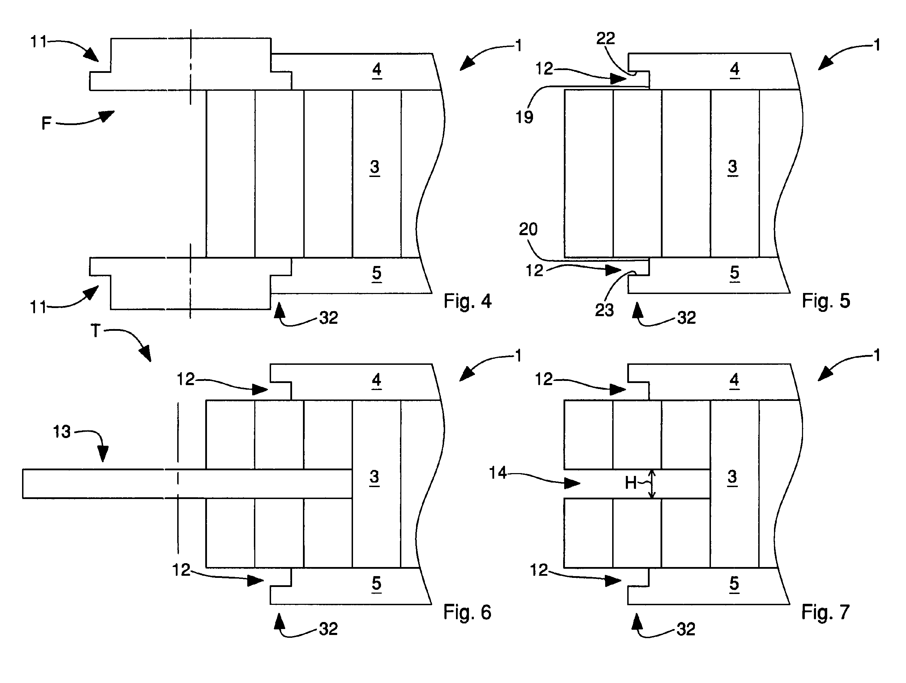

With reference to Figures 4 to 25 a method is illustrated for preparing the panel 1 for edgebanding.

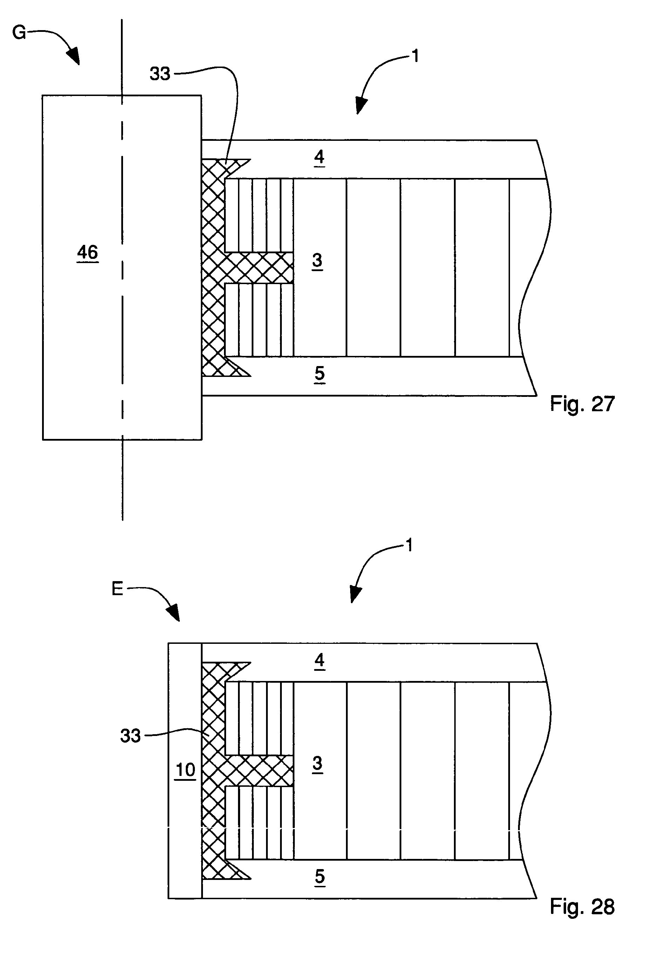

As already mentioned, preparing the panel 1 for edgebanding refers to the machinings to be performed on a first perimetrical side 6, a second perimetrical side 7, a third perimetrical side 8 and a fourth perimetrical side 9 (Figure 2) of lesser thickness of the panel 1 before on the first perimetrical side 6, on the second perimetrical side 7, on the third perimetrical side 8 and on the fourth perimetrical side 9 respective decorative edge elements 10 are applied (Figures 28-35), for example strips or band of plastics or similar materials.

This method initially provides a milling step F, shown in Figure 4.

In the milling step F a milling cutter 11 is used to mill partially along the first perimetrical side 6 respective head walls 15, 16 (Figure 3) of the first layer 4 and of the second layer 5, such as to form in the first layer 4 and in the second layer 5 respective notches 12 (Figure 5), or slots.

The notches 12, which face one another, extend substantially longitudinally along the first perimetrical side 6 substantially for the entire length thereof.

In particular, the notches 12 are formed by respective side walls 22, 23, which face one another and extend substantially perpendicularly to the head walls 15, 16, and by respective base walls 19, 20 extending substantially parallelly to the head walls 15, 16.

In this manner, each base wall 19, 20 forms with a respective and consecutive side wall 22, 23 a substantially right angle.

After the milling step F the aforesaid method comprises a cutting step T, shown in Figure 6.

In the cutting step T the intermediate layer 3 is cut by a further milling cutter 13.

In particular, in the cutting step T a cut 14 (Figure 7) is made that has a height H of a few millimetres that is positioned, for example, substantially half-way up the intermediate layer 3 to interrupt the height continuity of the intermediate layer 3.

Further, the cut 14 penetrates inside the intermediate layer 3 to approximately 10 millimetres.

In one embodiment of the invention, which is not shown, the cut 14 ends substantially flush with respective head portions 15, 16 of the first layer 4 and of the second layer 5.

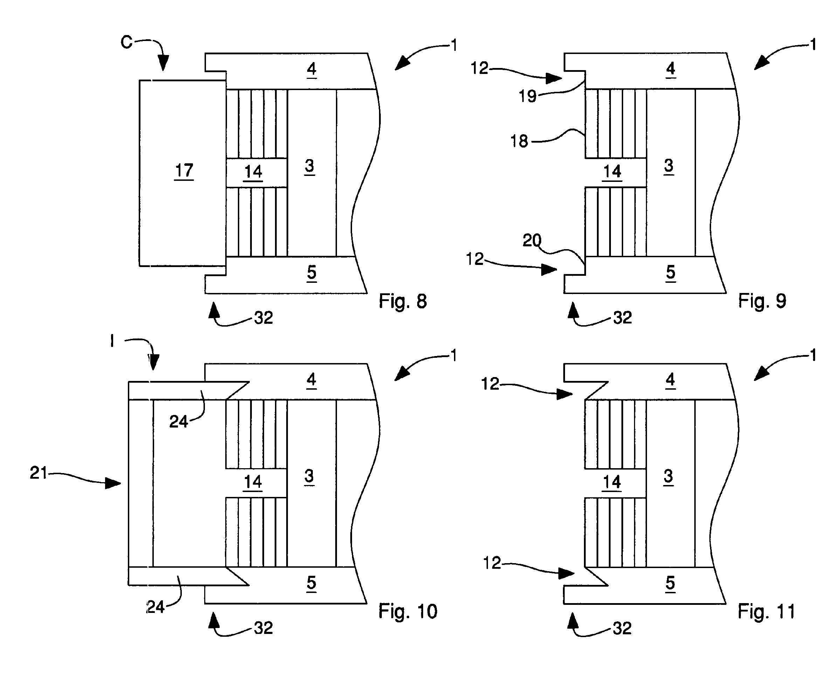

After the cutting step T the aforesaid method comprises a compression step C, shown in Figure 8.

In the compression step C the intermediate layer 3 is compressed by a pressing element 17 such that an end 18 of the pressing element 17 (Figures 3, 9) is substantially flush with the base walls 19, 20.

Following the compression step C the method according to the invention includes an incision step I, shown in Figure 10.

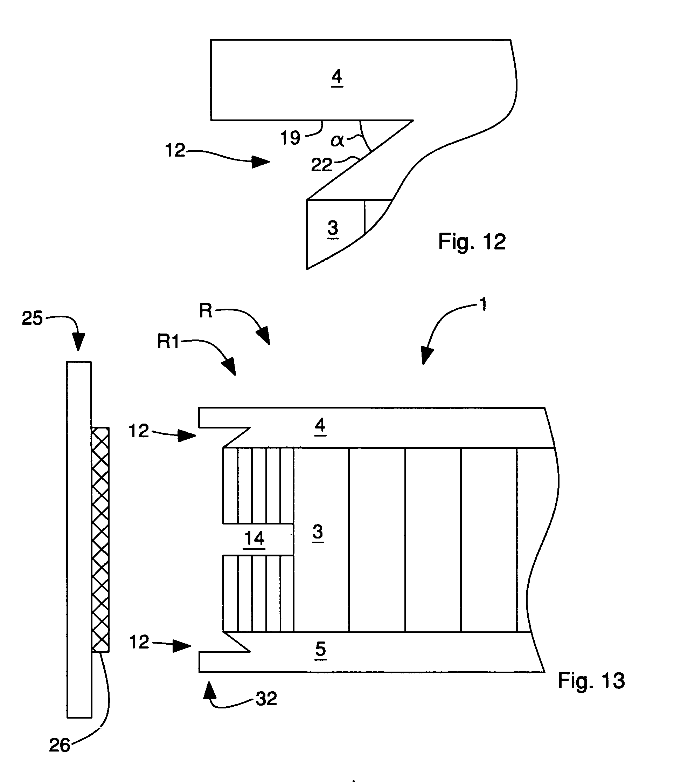

In the incision step I incisions are made longitudinally into the base walls 19, 20 of the notches 12 by an incision tool 21, for example provided with plates 24, such that the base walls 19, 20 form an acute angle α (Figure 12) with the respective side walls 22, 23.

After the incision step I, the aforesaid method provides a filling step R, shown in Figures 13 to 16.

The filling step R initially comprises a first step R1 (Figure 13).

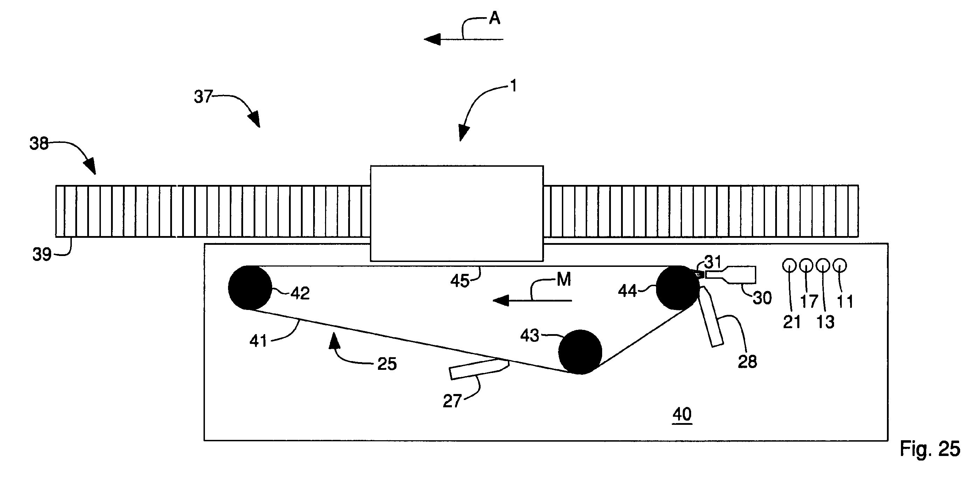

The first step R1 provides dispensing, via a first dispenser 27 (Figure 25) a first layer 26 of thermoplastic material, for example comprising polyester, on transferring means 25. Alternatively, the thermoplastic material may comprise one of: a melted hot adhesive, a melted hot vinyl acetate ethylene adhesive, a wax, a polyamide, a polyurethane, a polyolefin.

Subsequently, the first step R1 further comprises hardening, i.e. making semi-solid, the first layer 26.

This is performed during movement of the first layer 26 on the transferring means 25.

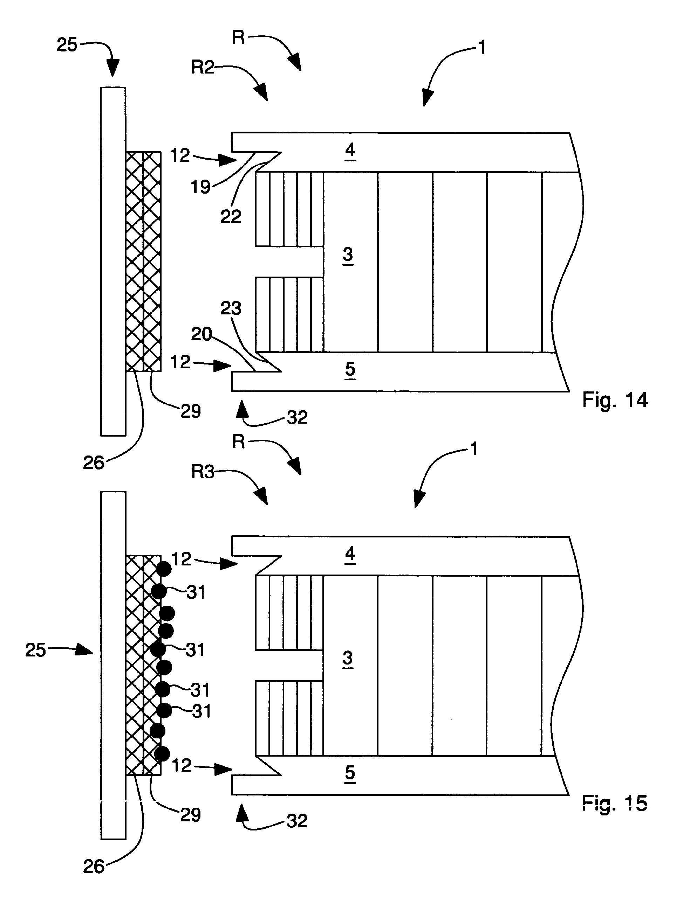

After the first step R1, the filling step R provides a second step R2 (Figure 14).

The second step R2 dispenses, via a second dispenser 28 (Figure 25) a second layer 29 of thermoplastic material, in liquid state, onto the first layer 26.

After the second step R2, the filling step R has a third step R3, shown in Figure 15.

The third step R3 ejects, via an ejector 30 (Figure 25) a mixture of material in grains 31 onto the second layer 29 of thermoplastic material.

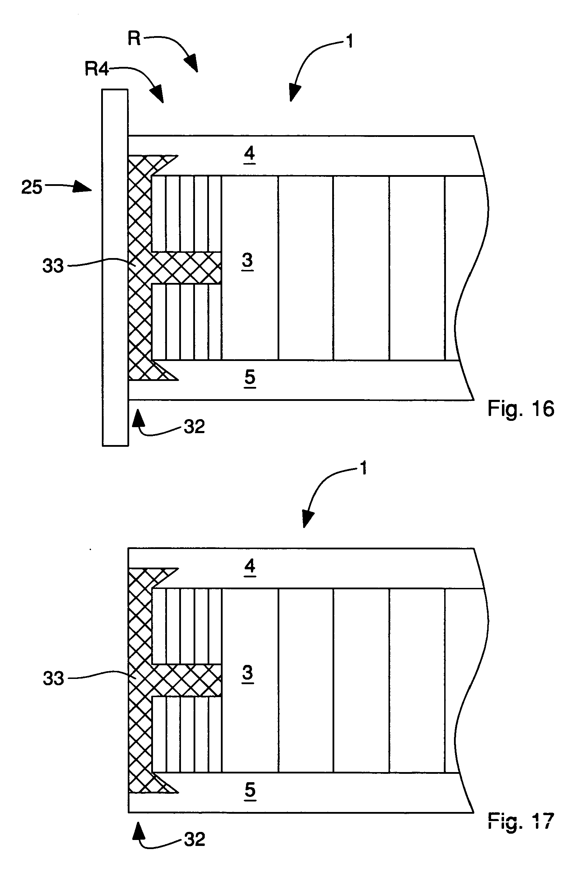

In particular, the grains 31 can be an inert material, for example wood sawdust, a heat-meltable glue, or the like. After the third step R3, the filling step R has a fourth step R4, shown in Figure 16.

The fourth step R4 transfers, via the transferring means 25, the first layer 26, in semi-solid state, the second layer 29, in liquid state, and the mixture of grains 31 to a peripheral portion 32 of the panel 1.

In particular, this transferring comprises pressing the transferring means 25 against the peripheral portion 32 in such a manner that the second layer 29 in liquid state and the mixture of grains 31 penetrate the intermediate layer 3 and the notches 12.

In this step, the first layer 26 in semi-solid state acts as a pressing element to press the second layer 29 against the peripheral portion 32 so as to promote the adhesion thereof. In other words, the fourth step R4 consists of applying the second layer 29, in liquid state, and the mixture in grains 31 to the peripheral portion 32, and simultaneously applying the partially hardened first layer 26 to the peripheral portion 32 such that the first layer 26 presses the second layer 29 against the peripheral portion 32.

Once solidified, the first layer 26, the second layer 29 and the mixture in grains 31 form a supporting element 33 for a decorative edge element 10 (Figure 17).

The milling step F, the cutting step T, the compression step C, the incision step I and the filling step R occur, as shown in Figure 25, with the panel 1 moving along an advancement direction A.

Further, the aforesaid method comprises, during the milling step F, the cutting step T, the compression step C, the incision step I and the filling step R, maintaining the panel 1 pressed between pressing means, which is not shown, acting respectively on the first layer 4 and on the second layer 5.

After preparing the first perimetrical side 6, the panel 1 has, at the head and tail, excesses 34 of thermoplastic material in solid state protruding from the second perimetrical side 7 and from the fourth perimetrical side 9. After preparing the first perimetrical side 6, the method provides to prepare the third perimetrical side 8.

In order to prepare the third perimetrical side 8 the milling step F, the cutting step T, the compression step C, the incision step I and the filling step R are repeated in sequence.

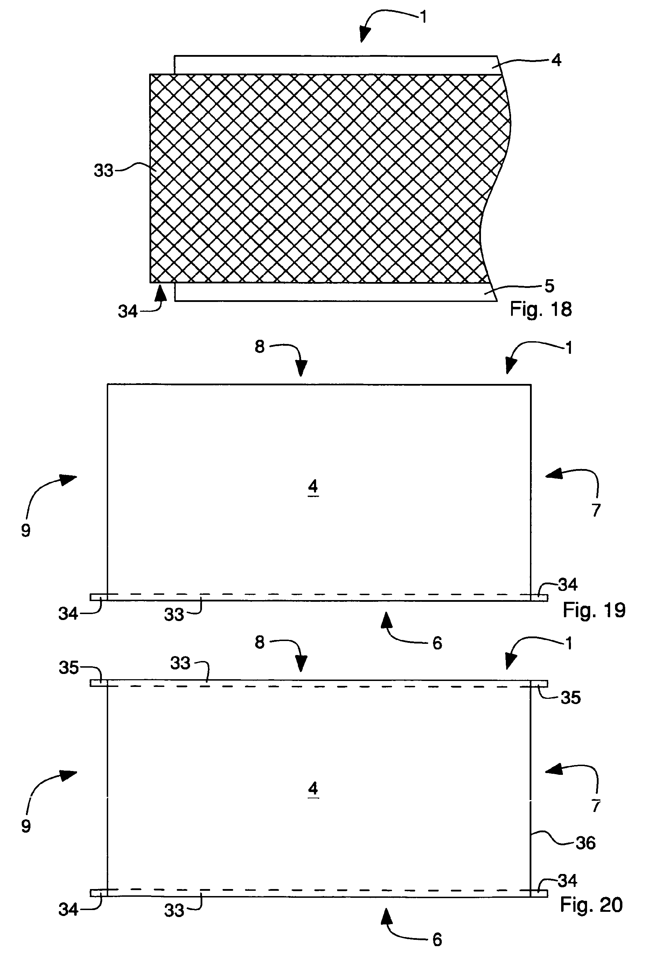

After preparing the third perimetrical side 8, the panel 1 has, at the head and tail, further excesses 35 (Figure 20) of thermoplastic material in solid state protruding from the second perimetrical side 7 and from the fourth perimetrical side 9.

After preparing the first perimetrical side 6 and the third perimetrical side 8, the method provides to prepare the second perimetrical side 7.

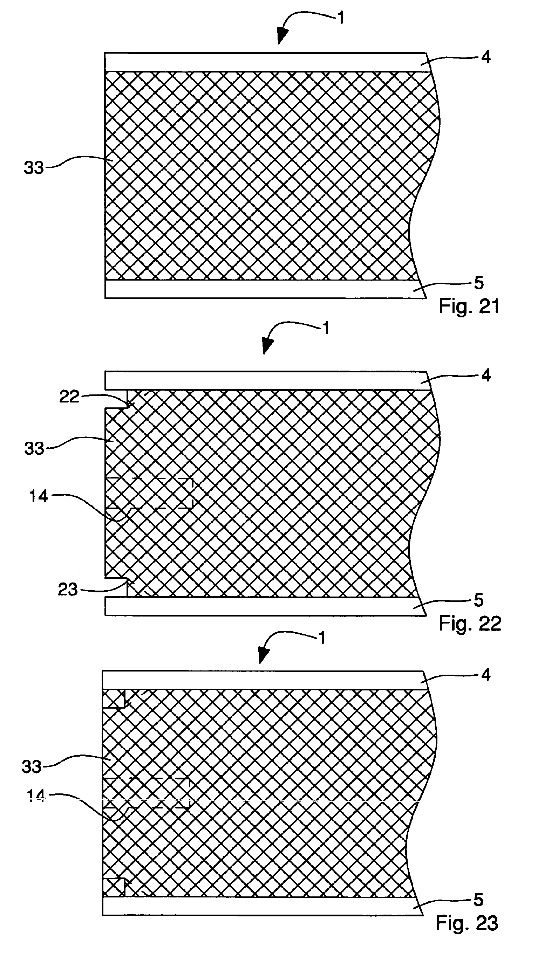

In order to do this, the excesses 34 and the further excesses 35 protruding from the second perimetrical side 7 (Figure 21) are initially removed.

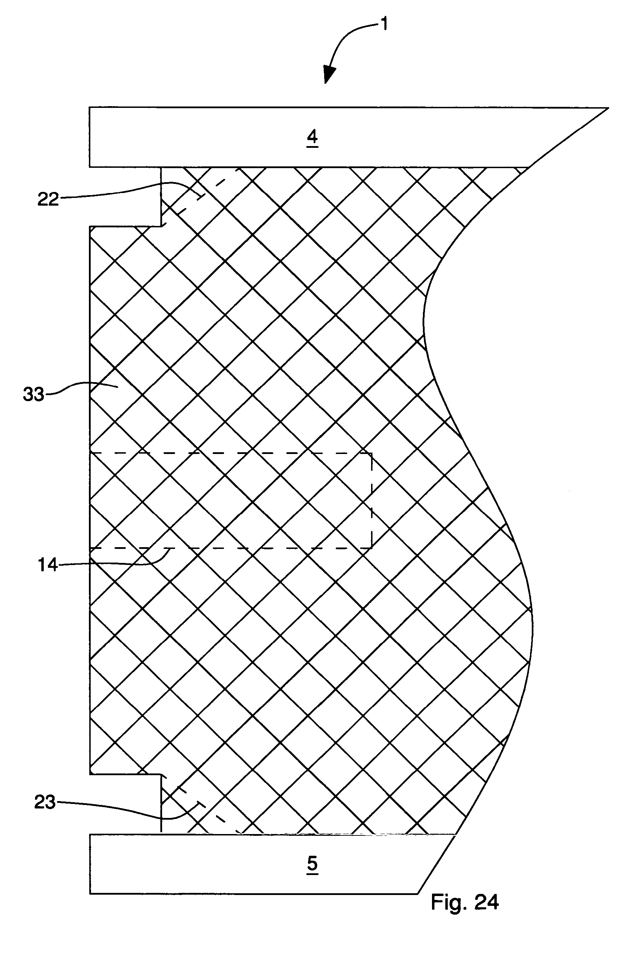

Subsequently, this method repeats in sequence the milling step F (Figures 22 and 24), the cutting step T (Figures 22 and 24), the compression step C, the incision step I (Figures 22 and 24) and the filling step R (Figure 23). Nevertheless, unlike what is disclosed with reference to the preparation of the first perimetrical side 6 and of the third perimetrical side 8, only the milling step F and the filling step R are conducted over the entire length of the second perimetrical side 7, whilst the cutting step T, the compression step C and the incision step I are made in a region 36 (Figure 20) of the second perimetrical side 7 comprised between the excess 34 and the further excess 35 in such a way as not to ruin the end portions of the second perimetrical side 7 already prepared for edgebanding, i.e. provided with solidified thermoplastic material.

After preparing the second perimetrical side 7, the method provides to prepare the fourth perimetrical side 9.

The preparation of the fourth perimetrical side 9 is not disclosed inasmuch as it is similar to what is disclosed with reference to second perimetrical side 7.

After preparing all the perimetrical sides 6, 7, 8 and 9 according to the method disclosed previously, it is possible to edgeband the panel 1 according to a known edgebanding method.

In one embodiment of the invention, which is not shown, the first layer 26 and the second layer 29 are made of different thermoplastic materials.

The aforesaid method for preparing the panel 1 for edgebanding is applied via an apparatus 37, illustrated schematically in Figure 25.

The apparatus 37 is arranged for being positioned laterally with respect to the panel 1, the panel 1 being moved along the advancement direction A by conveying means 38.

In particular, the conveying means 38 is arranged for moving the panel 1 along a substantially horizontal plane and comprises a conveyor belt 39.

In one embodiment of the invention, which is not shown, the conveying means 38 comprises a plurality of horizontal axis rollers.

The apparatus 37 further comprises a support 40 extending substantially parallelly to the advancement direction A and supporting, one after the other along the advancement direction A, the milling cutter 11, the further milling cutter 13, the pressing element 17, the incision tool 21 and the transferring means 25, the milling cutter 11, the further milling cutter 13, the pressing element 17, the incision tool 21 and the transferring means 25 being movable towards and away from the conveying means 38.

In particular, the transferring means 25 comprises a belt 41 closed in a loop on rollers 42, 43 and 44 with a vertical axis.

The belt 41 can be formed by a metal sheet covered with non-adhesive material.

The belt 41 is rotated by the rollers 42, 43 and 44 in such a manner that sections 45 of the belt 41 that are positioned parallelly to a perimetrical side (6, 7, 8, 9) being machined move in the advancement direction A.

In other words, the sections 45 of the belt 41 that are positioned parallelly to a perimetrical side (6, 7, 8, 9) being machined move along a movement direction M substantially parallel to the advancement direction A.

The support 40 further supports the ejector 30, the first dispenser 27 and the second dispenser 28, the ejector 30, the first dispenser 27 and the second dispenser 28 being movable towards and away from the transferring means 25.

In particular, the first dispenser 27 is positioned upstream of the second dispenser 28 with respect to the movement direction M, and the second dispenser 28 is positioned upstream of the ejector 30 with respect to the movement direction M.

In use, the apparatus 37 can prepare in sequence for edgebanding, according to the method disclosed previously, the first perimetrical side 6, the third perimetrical side 8, the second perimetrical side 7 and the fourth perimetrical side 9.

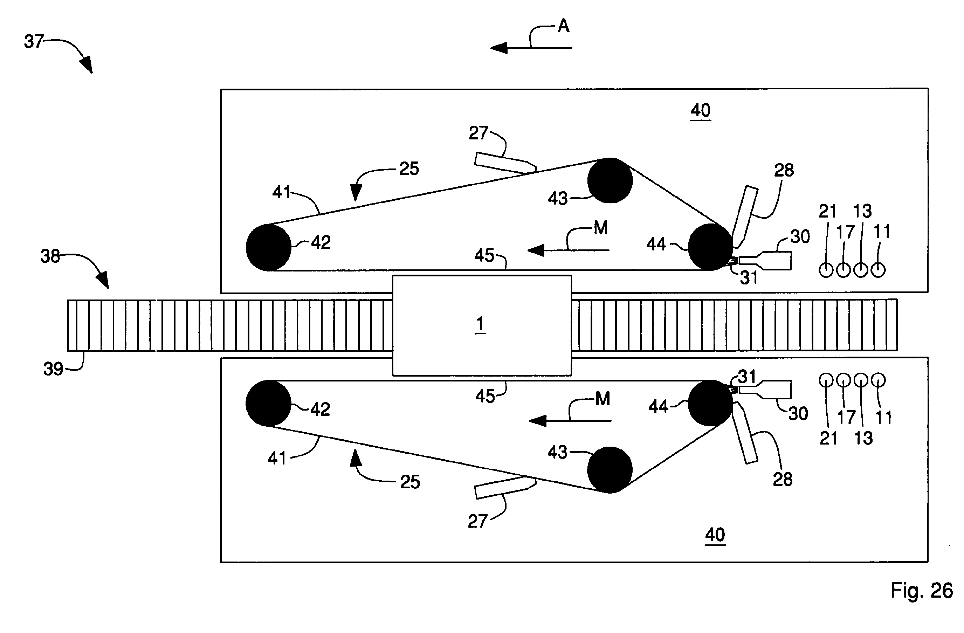

In a further version, shown in Figure 26, the apparatus 37 can simultaneously prepare for edgebanding two of the perimetrical sides 6, 7, 8, 9, for example the first perimetrical side 6 and the third perimetrical side 8 and subsequently the second perimetrical side 7 and the fourth perimetrical side 9.

In this further embodiment the apparatus 37 comprises a pair of supports 40 positioned laterally and on opposite sides with respect to the panel 1.

Each support 40 supports, one after the other along the advancement direction A, a milling cutter 11, a further milling cutter 13, a pressing element 17, an incision tool 21 and transferring means 25, the milling cutter 11, the further milling cutter 13, the pressing element 17, the incision tool 21 and the transferring means 25 being movable towards and away from the conveying means 38.

Each support 40 further supports an ejector 30, a first dispenser 27 and a second dispenser 28, the ejector 30, the first dispenser 27 and the second dispenser 28 being movable towards and away from the respective transferring means 25. In particular, the first dispensers 27 are positioned upstream of the respective second dispensers 28 with respect to the aforesaid movement direction M, and the second dispensers 28 are positioned upstream of the respective ejector 30 compared with the movement direction M.

In use, the apparatus 37 can prepare in sequence for edgebanding, according to the method disclosed previously, initially the first perimetrical side 6 and the third perimetrical side 8 and subsequently the second perimetrical side 7 and the fourth perimetrical side 9.

In this case, after preparing the first perimetrical side 6 and the third perimetrical side 8 and before preparing the second perimetrical side 7 and the fourth perimetrical side 9 it is necessary to remove the excesses 34 and the further excesses 35 protruding from the second perimetrical side 7 and from the fourth perimetrical side 9 (Figure 21).

With reference to Figures 27 to 35 some steps of a method for edgebanding the panel 1 are shown.

In particular, this method is applied if a plant, which is not shown, is available comprising an apparatus 37 (in the embodiment shown in Figure 25) and an edgebanding apparatus, which is not shown, positioned downstream of the apparatus 37 with respect to the advancement direction A.

This method comprises, after performing on the first perimetrical side 6 the milling step F, the cutting step T, the compression step C, the incision step I and the filling step R, a grinding step G, shown in Figure 27.

In the grinding step G the first perimetrical side 6 that was previously prepared for edgebanding is ground by a grinder 46.

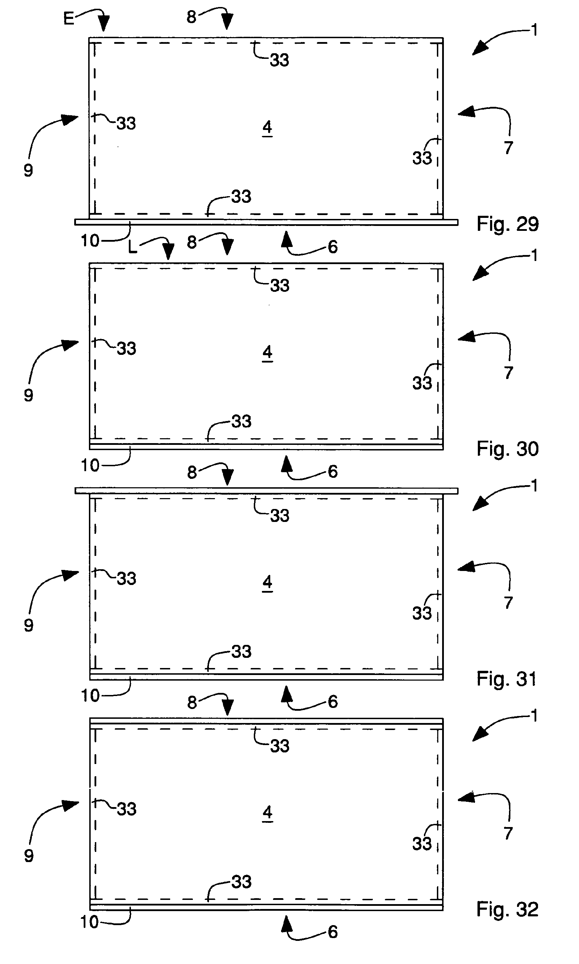

After the grinding step G, the method provides a fixing step E, shown in Figures 28 and 29.

In the fixing step E a decorative edge element 10 is fixed, for example by glue, to the first perimetrical side 6.

After the fixing step E, the method provides a cutting and trimming step L, shown in Figure 30.

In the cutting and trimming step L the decorative edge element 10 that was previously fixed to the first perimetrical side 6 is cut and trimmed by suitable tools, which are not shown.

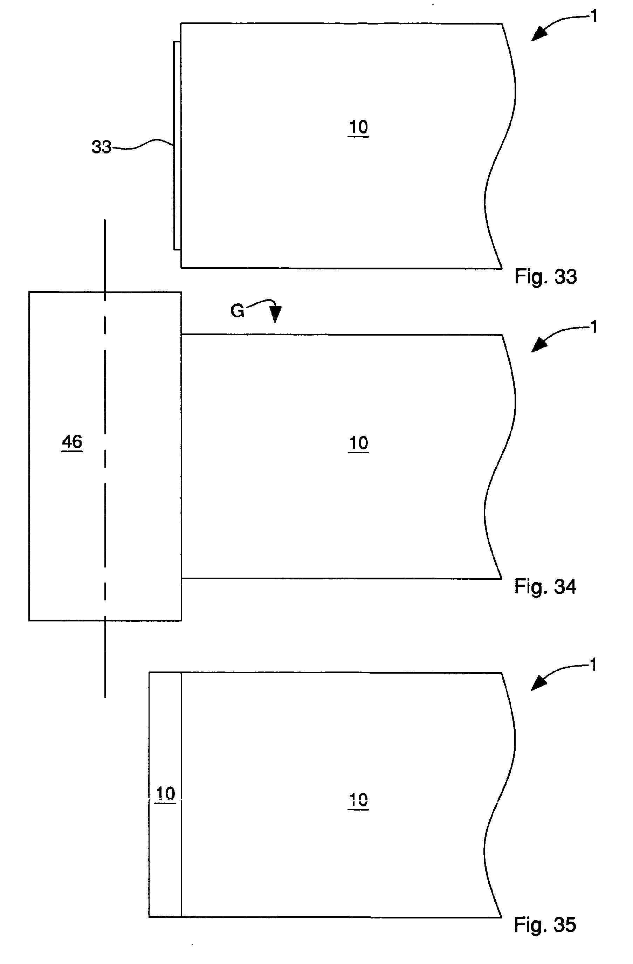

This method further comprises, after the milling step F, the cutting step T, the compression step C, the incision step I and the filling step R have been performed on the third perimetrical side 8, repeating the grinding step G, the application step E, and the cutting and trimming step L on the third perimetrical side 8 (Figures 31 and 32). Subsequently, after edgebanding the first perimetrical side 6 and the third perimetrical side 8 and after preparing the second perimetrical side 7 in the aforesaid manner, the method repeats the grinding step G (Figure 34) on the second perimetrical side 7 that has been previously prepared for edgebanding (Figure 33).

After the grinding step G, the method repeats the fixing step E (Figure 35) and the cutting and trimming step L. Still subsequently, after edgebanding the second perimetrical side 7 and after preparing the fourth perimetrical side 9 in the aforesaid manner, the method repeats the grinding step G (Figure 34) on the fourth perimetrical side 7 previously prepared for edgebanding. After the grinding step G, the method repeats the fixing step E and the cutting and trimming step L.

The edgebanding method disclosed above can be used, suitably modified, even if a plant that is not shown is available comprising an apparatus 37 (in the embodiment shown in Figure 26) and an edgebanding apparatus, which is not shown, positioned downstream of the apparatus 37 with respect to the advancement direction A and arranged for edgebanding one pair of perimetrical sides at a time.

It should be noted how the method for preparing the panel 1 for edgebanding is not expensive and is easy to apply. Further, the thermoplastic material, after it has hardened, enables the respective peripheral regions of the first external layer 4 and of the second external layer 5 to be reinforced and connected more firmly, preventing in use possible detachment of these peripheral portions from the intermediate layer 3.

Further, the thermoplastic material, after it has hardened, can be easily shaped and suitably profiled in such a manner as to form a wide contact surface that enables the edge element 10 to be supported better than the supporting element of the known methods, the edge element 10 being thus able to assume also shaped conformations.

Also, as the thermoplastic material is not very flexible to compression, it enables the edge element 10 to be supported better.

Also, it should be noted that the apparatus 37 is cheaper and easier to make than known apparatuses.

In fact, the apparatus 37 does not require the cutting device, the glue distributor and the pressing roller that made known apparatuses particularly expensive and complex to make.

Also, it should be noted that the notches 12 enable the adhesion of the thermoplastic material to the peripheral portion 32 to be improved.

In fact, the notches 12 act as supporting elements of the thermoplastic material once it has been hardened.

Also, it should be noted that the first semi-solid layer 26 enables the second layer 29 to be pressed effectively against the peripheral portion 32, the second layer 29, in liquid state, acting as an adhesive.

In particular, the pressing action exerted by the first layer 26 in semi-solid state enables the adhesion of the thermoplastic material to the panel 1 to be improved. Further, the first semi-solid layer 26 reduces the cooling time of the thermoplastic material once the latter has been applied to the panel 1.

Also, it should be noted how the mixture in grains 31 in addition to having an adhesive function (when consisting of glue in granules) has the function of cooling the thermoplastic material. This enables it to be prevented that, after edgebanding the panel 1, the heat yielded outside the thermoplastic material during the solidification step deforms the decorative edge elements 10.

The mixture, in one embodiment, can be further cooled before being applied to the second layer 29 to increase cooling capacity.

Further, the mixture in grains 31 enables the quantity of thermoplastic material to be applied to the panel to be reduced, and as the mixture is particularly cheap, enables the costs associated with the aforesaid method to be reduced.

### Illustrative embodiments

### Embodiment 1

Method for preparing a panel made of wood or similar materials for edgebanding, in particular a composite panel (1) with a light structure provided with a first external layer (4), with a second external layer (5) and with an intermediate layer (3), said method comprising applying a layer (29) of thermoplastic material to a peripheral portion (32) of said panel (1) and further applying a further layer (26) of a further thermoplastic material to said peripheral portion (32), said further layer (26) being stiffer than said layer (29) such that said further layer (26) presses said layer (29) against said peripheral portion (32), said layer (29) and said further layer (26) being intended to form a supporting element (33) for an edge element (10) that is fixable to said peripheral portion (32).

### Embodiment 2

Method of the embodiment 1, wherein during said applying, said layer (26) is in liquid state.

### Embodiment 3

Method of the embodiment 1, or 2, wherein during said further applying said further layer (29) is in semi-solid state, in particular it is partially hardened.

### Embodiment 4

Method of the embodiment 1, or 2, or 3, wherein said further applying comprises transferring said further layer (26) to said peripheral portion (32) by transferring means (25), said transferring means (25) receiving said further layer (26) from dispensing means (27) of said further thermoplastic material.

### Embodiment 5

Method of the embodiment 4, wherein said applying comprises further transferring said layer (29) to said peripheral portion (32) by said transferring means (25), said transferring means (25) receiving said layer (29) from further dispensing means (28) of said thermoplastic material, said further dispensing means (28) dispensing said layer (29) on said further layer (26).

### Embodiment 6

Method of any one of embodiments 1 to 5, and comprising, before said applying, spraying a mixture in grains (31) onto said layer (29) for thermally conditioning, in particular cooling, said thermoplastic material.

### Embodiment 7

Method of the embodiment 5, and comprising, before said spraying, thermally conditioning, in particular cooling, said mixture in grains.

### Embodiment 8

Method of the embodiment 5, or 6, wherein said mixture in grains (31) comprises wood sawdust or heat-meltable glue.

### Embodiment 9

Method of any one of embodiments 1 to 8, and comprising, before said applying, forming notches (12) in said first external layer (4) and in said second external layer (5), said notches, extending longitudinally along said peripheral portion (32) and facing one another, being shaped in such a manner as to be filled by thermoplastic material and to act as supports for said thermoplastic material once it has hardened.

### Embodiment 10

Method of any one of embodiments 1 to 9, and comprising, before said applying, cutting said intermediate layer (3) longitudinally.

### Embodiment 11

Method of the embodiment 10, and comprising, after said cutting, compressing said intermediate layer (3).

### Embodiment 12

Method of any one of embodiments 1 to 11, wherein said thermoplastic material and said further thermoplastic material are one of: a polyester, a melted hot adhesive, a melted hot vinyl acetate ethylene adhesive, a wax, a polyamide, a polyurethane, a polyolefin.

### Embodiment 13

Method of any one of embodiments 1 to 12, wherein said intermediate layer (3) has a honeycomb structure.

### Embodiment 14

Method of the embodiment 13, wherein said applying comprises penetrating said honeycomb structure with said layer (29).

## Claims

1. Apparatus for preparing a panel made of wood or similar materials for edgebanding, in particular a composite panel (1) with a light structure provided with a first external layer (4), with a second external layer (5) and with an intermediate layer (3), said apparatus (37) being **characterised in that** it comprises transferring means (25) for transferring a thermoplastic material to a peripheral portion (32) of said panel (1), dispensing means (28) for dispensing a layer (29) of said thermoplastic material to said transferring means (25), and further dispensing means (27) for dispensing a further layer (26) of thermoplastic material to said transferring means (25), said further dispensing means (27) being positioned upstream of said dispensing means (28) with respect to a movement direction (M) of said transferring means (25) so that said layer (29) is dispensed above said further layer (26).

2. Apparatus according to claim 1, and comprising ejecting means (30) for ejecting material in grains (31) onto said layer (29), said ejecting means (30) being positioned downstream of said dispensing means (28) with respect to said movement direction (M).

3. Apparatus according to claim 1, or 2, and comprising forming means (11, 21) for forming notches (12) in said first external layer (4) and in said second external layer (5), said notches, extending longitudinally along said peripheral portion (32).

## Patentansprüche

1. Vorrichtung zum Vorbereiten eines Paneels, das aus Holz oder ähnlichen Materialien hergestellt ist, für ein Kantenverbinden, insbesondere ein zusammengesetztes Paneel (1) mit einer leichten Struktur, das mit einer ersten äußeren Schicht (4) versehen ist, mit einer zweiten äußeren Schicht (5) und einer dazwischen angeordneten Schicht (3), wobei die Vorrichtung (37) **dadurch gekennzeichnet ist, dass** sie ein Übertragungsmittel (25) zum Übertragen eines thermoplastischen Materials auf einen Umfangsbereich (32) des Paneels (1) umfasst, ein Ausgabemittel (28) zur Ausgabe einer Schicht (29) des thermoplastischen Materials auf das Übertragungsmittel (25), und ein weiteres Ausgabemittel (27) zum Ausgeben einer weiteren Schicht (26) eines thermoplastischen Materials auf das Übertragungsmittel (25), wobei das weitere Ausgabemittel (27) bezüglich einer Bewegungsrichtung (M) des Übertragungsmittels (25) stromaufwärts von dem Ausgabemittel (28) gelegen angeordnet ist, so dass die Schicht (29) über der weiteren Schicht (26) ausgegeben wird.

2. Vorrichtung gemäß Anspruch 1 und umfassend ein Auswurfmittel (30) zum Ausgeben eines Materials in Körnern (31) auf die Schicht (29), wobei das Auswurfmittel (30) bezüglich der Bewegungsrichtung (M) stromabwärts von dem Abgabemittel (28) gelegen angeordnet ist.

3. Vorrichtung gemäß Anspruch 1 oder 2 und umfassend ein Ausbildmittel (11, 21) zum Ausbilden von Ausnehmungen (12) in der ersten äußeren Schicht (4) und in der zweiten äußeren Schicht (5), wobei die Ausnehmungen sich in Längsrichtung entlang des Umfangsbereichs (32) erstrecken.

## Revendications

1. Dispositif pour préparer un panneau fait de bois ou de matériaux similaires pour le placage de chants, en particulier un panneau composite (1) avec une structure légère pourvue d'une première couche extérieure (4), d'une deuxième couche extérieure (5) et d'une couche intermédiaire (3), ledit dispositif (37) étant ***caractérisé en ce qu'**il* comprend des moyens de transfert (25) pour transférer un matériau thermoplastique jusqu'à une portion périphérique (32) dudit panneau (1), des moyens distributeurs (28) pour délivrer une couche (29) dudit matériau thermoplastique auxdits moyens de transfert (25), et d'autres moyens distributeurs (27) pour délivrer une autre couche (26) de matériau thermoplastique auxdits moyens de transfert (25), lesdits autres moyens distributeurs (27) étant positionnés en amont desdits moyens distributeurs (28) par rapport à une direction de déplacement (M) desdits moyens de transfert (25), de telle sorte que ladite couche (29) soit délivrée au-dessus de ladite autre couche (26).

2. Dispositif selon la revendication 1, et comprenant des moyens éjecteurs (30) pour éjecter un matériau en grains (31) sur ladite couche (29), lesdits moyens éjecteurs (30) étant positionnés en aval desdits moyens distributeurs (28) par rapport à ladite direction de déplacement (M).

3. Dispositif selon la revendication 1 ou 2, et comprenant des moyens de formage (11, 21) pour former des encoches (12) dans ladite première couche extérieure (4) et dans ladite deuxième couche extérieure (5), lesdites encoches s'étendant longitudinalement le long de ladite portion périphérique (32).
